(19) Europäisches Patentamt
European Patent Office
Office européen des brevets

(11) **EP 3 920 146 A1**

(12) **EUROPEAN PATENT APPLICATION**
published in accordance with Art. 153(4) EPC

(43) Date of publication:
**08.12.2021 Bulletin 2021/49**

(51) Int Cl.:
***G06T 13/40*** (2011.01)

(21) Application number: **20748016.1**

(22) Date of filing: **14.01.2020**

(86) International application number:
**PCT/CN2020/072023**

(87) International publication number:
**WO 2020/156148 (06.08.2020 Gazette 2020/32)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **01.02.2019 CN 201910103414**

(71) Applicant: **TENCENT TECHNOLOGY (SHENZHEN)
COMPANY LIMITED
Shenzhen, Guangdong 518057, (CN)**

(72) Inventors:
• **SUN, Shuang**
  Shenzhen, GUANGDONG 518057 (CN)
• **LI, Chen**
  Shenzhen, GUANGDONG 518057 (CN)
• **TAI, Yuwing**
  Shenzhen, GUANGDONG 518057 (CN)
• **JIA, Jiaya**
  Shenzhen, GUANGDONG 518057 (CN)
• **SHEN, Xiaoyong**
  Shenzhen, GUANGDONG 518057 (CN)

(74) Representative: **Eisenführ Speiser
Patentanwälte Rechtsanwälte PartGmbB
Postfach 31 02 60
80102 München (DE)**

(54) **METHOD FOR TRAINING SMPL PARAMETER PREDICTION MODEL, COMPUTER DEVICE, AND STORAGE MEDIUM**

(57)    A method for training an SMPL parameter prediction model, comprising: obtaining a sample picture; inputting the sample picture to a posture parameter prediction model to obtain a posture prediction parameter; inputting the sample picture to a morphology parameter prediction model to obtain a morphology prediction parameter; computing a model prediction loss according to an SMPL prediction parameter and annotation information of the sample picture; and inversely training the posture parameter prediction model and the morphology parameter prediction model according to the model prediction loss.

EP 3 920 146 A1

Obtain a sample picture, the sample picture containing a human body image — 101

Input the sample picture into a pose parameter prediction model to obtain a predicted pose parameter, the predicted pose parameter being a prameter indicating a human body pose in the SMPL parameter prediction model — 102

Input the sample picture into a shape parameter prediction model to obtain a predicted shape parameter, the predicted shape parameter being a parameter indicating a human body shape in the SMPL parameter prediction model — 103

Construct a three-dimensional human body model by using an SMPL model according to the predicted pose parameter and the predicted shape parameter — 104

Calculate model prediction losses according to the predicted SMPL parameters and/or the three-dimensional human body model in combination with annotation information of the sample picture — 105

Update the pose parameter prediction model and the shape parameter prediction model according to the model prediction losses — 106

**FIG. 1**

## Description

This application claims priority to Chinese Patent Application No. 201910103414X, titled "METHOD FOR TRAINING SMPL PARAMETER PREDICTION MODEL, SERVER, AND STORAGE MEDIUM" and filed with the National Intellectual Property Administration, PRC, on February 1, 2019, which is incorporated herein by reference in its entirety.

## FIELD

Embodiments of the present disclosure relate to the field of computer vision, and in particular, to a method for training an SMPL parameter prediction model, a computer device, and a storage medium.

## BACKGROUND

Three-dimensional human body reconstruction is an important topic in the computer vision research and has great application value in the fields such as virtual reality (VR), human body animation, and games.
In related technologies, three-dimensional human body reconstruction is performed for a human body in a two-dimensional image by utilizing a skinned multi-person linear (SMPL) model. In a three-dimensional human body reconstruction method, human body information such as two-dimensional joints, three-dimensional joints, a two-dimensional human body segmentation map, and three-dimensional voxels of a human body in a two-dimensional image are extracted by utilizing a human body information extraction model. Then, the extracted human body information is inputted into a parameter prediction model for SMPL parameter prediction; and SMPL parameters obtained by prediction are inputted into an SMPL model for three-dimensional human body reconstruction.
However, in the above method, the human body information extraction model and the parameter prediction model are required to be trained separately before three-dimensional human body reconstruction; and then the separately trained models are trained jointly, resulting in a complex model training process and consuming much time.

## SUMMARY

According to embodiments provided in the present disclosure, a method for training an SMPL parameter prediction model, a computer device, and a storage medium are provided. The technical solutions are as follows.
In a first aspect, a method for training an SMPL parameter prediction model is provided according to embodiments of the present disclosure. The method is performed by a computer device, and the method includes:

   obtaining a sample picture, where the sample picture contains a human body image;

   inputting the sample picture into a pose parameter prediction model to obtain a predicted pose parameter, where the predicted pose parameter is a parameter used for indicating a human body pose in the SMPL parameter prediction model;

   inputting the sample picture into a shape parameter prediction model to obtain a predicted shape parameter, where the predicted shape parameter is a parameter used for indicating a human body shape in the SMPL parameter prediction model;

   calculating model prediction losses according to the SMPL parameter prediction model and annotation information of the sample picture; and

   updating the pose parameter prediction model and the shape parameter prediction model according to the model prediction losses.

In another aspect, a three-dimensional human body reconstruction method is provided according to embodiments of the present disclosure. The method is performed by a computer device, and the method includes:

   obtaining a target picture, where the target picture contains a human body image;

   inputting the target picture into a pose parameter prediction model to obtain a predicted pose parameter, where the predicted pose parameter is a parameter used for indicating a human body pose in the SMPL parameter prediction model;

inputting the target picture into a shape parameter prediction model to obtain a predicted shape parameter, where the predicted shape parameter is a parameter used for indicating a human body shape in the SMPL parameter prediction model; and

constructing a target three-dimensional human body model by using an SMPL model according to the predicted pose parameter and the predicted shape parameter

In another aspect, an apparatus for training an SMPL parameter prediction model is provided according to embodiments of the present application. The apparatus includes a first obtaining module, a first prediction module, a second prediction module, a loss calculation module and a training module. The first obtaining module is configured to obtain a sample picture. The sample picture contains a human body image. The first prediction module is configured to input the sample picture into a pose parameter prediction model to obtain a predicted pose parameter. The predicted pose parameter is a parameter used for indicating a human body pose in the SMPL parameter prediction model. The second prediction module is configured to input the sample picture into a shape parameter prediction model to obtain a predicted shape parameter. The predicted shape parameter is a parameter used for indicating a human body shape in the SMPL parameter prediction model. The loss calculation module is configured to calculate model prediction losses according to the SMPL parameter prediction model and annotation information of the sample picture. The training module is configured to update the pose parameter prediction model and the shape parameter prediction model according to the model prediction losses

In another aspect, a three-dimensional human body reconstruction apparatus is provided according to embodiments of the present disclosure. The apparatus includes a second obtaining module, a third prediction module, a fourth prediction module and a second construction module. The second obtaining module is configured to obtain a target picture. The target picture contains a human body image. The third prediction module is configured to input the target picture into a pose parameter prediction model to obtain a predicted pose parameter. The predicted pose parameter is a parameter used for indicating a human body pose in the SMPL parameter prediction model. The fourth prediction module is configured to input the target picture into a shape parameter prediction model to obtain a predicted shape parameter. The predicted shape parameter is a parameter used for indicating a human body shape in the SMPL parameter prediction model. The second construction module is configured to construct a target three-dimensional human body model by using an SMPL model according to the predicted pose parameter and the predicted shape parameter.

In another aspect, a computer device including a processor and a memory is provided according to embodiments of the present disclosure. The memory stores computer-readable instructions. The computer-readable instructions, when executed by the processor, cause the processor to perform the method for training an SMPL parameter prediction model or the three-dimensional human body reconstruction method described above.

In another aspect, a non-volatile computer-readable storage medium storing computer-readable instructions is provided according to embodiments of the present disclosure. The computer-readable instructions, when executed by one or more processors, cause the one or more processors to perform the method for training an SMPL parameter prediction model or the three-dimensional human body reconstruction method described above.

Details of one or more embodiments of the present disclosure are provided in the drawings and descriptions below. Other features, objectives, and advantages of the present disclosure become apparent from the specification, the drawings, and the claims.

## BRIEF DESCRIPTION OF THE DRAWINGS

To describe the technical solutions in embodiments of the present disclosure more clearly, the accompanying drawings for describing the embodiments are described briefly hereinafter. Apparently, the accompanying drawings in the following descriptions show only some embodiments of the present disclosure, and a person of ordinary skill in the art may still derive other accompanying drawings from the accompanying drawings without creative efforts.

FIG. 1 is a flowchart of a method for training an SMPL parameter prediction model according to an embodiment of the present disclosure.

FIG. 2 is a schematic diagram illustrating a principle of a method for training an SMPL parameter prediction model according to an embodiment of the present disclosure.

FIG. 3 is a flowchart of a method for training an SMPL parameter prediction model according to another embodiment of the present disclosure.

FIG. 4 is a flowchart of a method for calculating a first model prediction loss according to an embodiment.

FIG. 5 is a flowchart of a method for calculating a second model prediction loss according to an embodiment.

FIG. 6 is a schematic diagram illustrating a principle for calculating a second model prediction loss according to an embodiment.

FIG. 7 is a flowchart of a method for calculating a third model prediction loss according to an embodiment.

FIG. 8 is a schematic diagram illustrating a principle for calculating a third model prediction loss according to an embodiment.

FIG. 9 is a schematic diagram of an application scenario according to an embodiment of the present disclosure.

FIG. 10 is a flowchart of a three-dimensional human body reconstruction method according to an embodiment of the present disclosure.

FIG. 11 and FIG. 12 show three-dimensional human body reconstruction results obtained by comparing the solution provided by the present disclosure and the HMR solution with a public data set.

FIG. 13 is a block diagram of an apparatus for training an SMPL parameter prediction model according to an embodiment of the present disclosure.

FIG. 14 is a block diagram of a three-dimensional human body reconstruction apparatus according to an embodiment of the present disclosure.

FIG. 15 is a schematic structural diagram of a computer device according to an embodiment of the present disclosure.

## DETAILED DESCRIPTION

To make objectives, technical solutions, and advantages of the present disclosure clearer, implementations of the present disclosure are described in detail with reference to the accompanying drawings hereinafter.

To facilitate understanding, terms involved in the embodiments of the present disclosure are explained below.

SMPL model is a parametric human body model, driven by SMPL parameters. The SMPL parameters include shape parameters $\beta$ and pose parameters $\theta$. The shape parameters $\beta \in \mathbb{R}^{10}$ include 10 parameters such as a height, size, and head-to-body ratio that characterize a human body. The pose parameters $\theta \in \mathbb{R}^{72}$ include 72 parameters corresponding to 24 joints (where parameters corresponding to each joint are represented by a three-dimensional rotation vector, and therefore there are a total of 24×3 parameters).

Based on the SMPL model, a three-dimensional human body model can be defined as:

$$ M\left(\beta,\theta;\phi\right)=W\left(\overline{T}+\mathrm{Bs}\left(\beta\right)+\mathrm{Bp}\left(\theta\right),\mathrm{T}\left(\beta\right),\theta\right) $$

M indicates a three-dimensional human body model of any human body, and a surface of the three-dimensional human body model contains n=6890 model vertices; $\beta$ represents shape parameters; $\theta$ represents pose parameters; $\phi$ represents fixed parameters obtained by learning from three-dimensional body scan data; $\overline{T} \in \mathbb{R}^{3n}$ represents model vertex parameters of an average human body model in a mean shape and a zero pose (where each vertex is represented by three-dimensional coordinates, so there are 3n parameters); Bs represents a shape-independent blending function for adjusting the shape of the average human body model according to the shape parameters; Bp represents a pose-independent blending function for adjusting the pose of the average human body model according to the pose parameters; T represents a function for calculating positions of joints of the human body; and W represents a standard blend skinning function.

Projection function is a function for projecting coordinate points in a three-dimensional space into a two-dimensional space. The projection function in the embodiments of the present disclosure is used for projecting the model vertices of the three-dimensional human body model into a two-dimensional image space. In a possible implementation, the projection function is a weak perspective projection function, and the projection function corresponds to a projection parameter C = {$C_s$, $C_x$, $C_y$}, where $C_s$ is a zoom parameter, and $C_x$ and $C_y$ are translation parameters. Correspondingly, the process of projecting coordinate points (x, y, z) in a three-dimensional space to a two-dimensional space is expressed as:

$$proj\left(x, y, z\right) = C_s g\left(x + C_x, y + C_y\right)$$

.

Pose parameter prediction model is a neural network model for predicting a human body pose in a picture. A picture is inputted to the model, a 72-dimensional pose parameter is outputted from the model. In an embodiment, the pose parameter prediction model in the embodiments of the present disclosure is further used for outputting a projection parameter according to the inputted picture, and correspondingly, the model outputs a parameter of 72+3=75 dimensions.

Shape parameter prediction model is a neural network model for predicting a human body shape in a picture. A picture is inputted to the model, and a 10-dimensional shape parameter is outputted from the model.

Annotation information represents information used for indicating a key parameter in a training sample, in the field of machine learning. The annotation information may be generated by manual annotation. Annotation information in the embodiments of the present disclosure is used for indicating a key parameter in a human body image, and the annotation information may include at least one of SMPL parameters, two-dimensional joint coordinates, three-dimensional joint coordinates, and a two-dimensional human body contour.

Loss function is a non-negative real-valued function for estimating a difference between a predicted value and a true value of a model. A smaller value of the loss function of a model indicates higher robustness of the model. The loss function in the embodiments of the present disclosure is used for estimating differences between predicted parameters outputted by the pose parameter prediction model and pre-annotated information and differences between predicted parameters outputted by the shape parameter prediction model and pre-annotated information.

When three-dimensional human body reconstruction is performed by using the SMPL model, parameters affecting the three-dimensional human body reconstruction include shape parameters and pose parameters. Therefore, to accurately predict the shape parameters and pose parameters is important for three-dimensional human body reconstruction based on a single picture. In related technologies, before the shape parameters and pose parameters are predicted, it is necessary to first extract human body information in a picture by using a human body information extraction model, then input a series of extracted human body information into a parameter prediction model, and finally obtain SMPL parameters outputted by the parameter prediction model.

During the process of performing three-dimensional human body reconstruction in the above manner, since the accuracy of the SMPL parameters is closely related to the accuracy of the extracted human body information, it is necessary to extract multi-dimensional human body information by using the human body information extraction model, such as two-dimensional joints, three-dimensional joints, a two-dimensional human body segmentation map, and three-dimensional voxels. Correspondingly, it is necessary to construct a complex human body information extraction model. In addition, since a large quantity of parameters are inputted into the parameter prediction model (that is, the amount of information in the human body information is large), the complexity of the constructed parameter prediction model is high. Furthermore, in the process of model training, it is necessary to first train the human body information extraction model and the parameter prediction model separately, and then perform joint training on the separately trained models, resulting in increasing of the complexity and time consumption of model training.

To avoid the above problems, in the method for training an SMPL parameter prediction model provided in the embodiments of the present disclosure, two neural network models (using a picture as the model input) for predicting pose parameters and shape parameters are designed respectively, so as to avoid separately training the human body information extraction model for extracting human body information. In addition, a corresponding loss function is designed from the perspective of the human body shape and pose, and the two neural network models are trained based on the designed loss function and annotation information. Therefore, the prediction accuracy of the neural network models is improved, thereby improving the accuracy of a reconstructed three-dimensional human body for the human body pose and shape. Exemplary embodiments are described below.

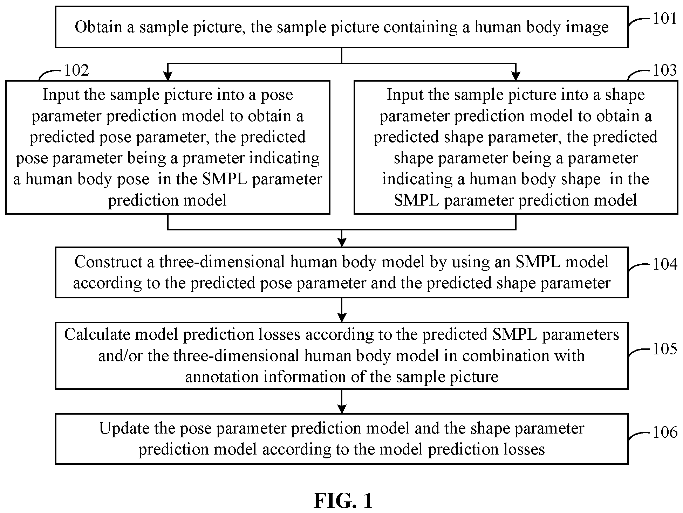

FIG. 1 is a flowchart of a method for training an SMPL parameter prediction model according to an embodiment of the present disclosure. In this embodiment, the training method is applied to a server. The method may include the following steps S101 to S106

In step 101, a sample picture is obtained. The sample picture contains a human body image.

In a possible implementation, the server performs model training based on multiple sample picture sets. Therefore, during the training process, the server obtains a sample picture from a sample picture set, and the sample picture set contains multiple pre-annotated sample pictures.

In an embodiment, each sample picture has at least one type of annotation information, and sample pictures in different sample picture sets have different types of annotation information.

For example, annotation information of sample pictures in a sample picture set A includes two-dimensional joint coordinates and a two-dimensional human body contour. Annotation information of sample pictures in a sample picture set B includes two-dimensional joint coordinates and three-dimensional joint coordinates. Annotation information of sample pictures in a sample picture set B includes two-dimensional joint coordinates and SMPL parameters.

Because different information in a picture needs to be used in the prediction of a pose parameter and a shape parameter are to be predicted by utilizing different information in a picture, the server, after obtaining a sample picture, inputs the sample picture into a pose parameter prediction model and a shape parameter prediction model respectively.

In an embodiment, before inputting the sample picture into the pose/shape parameter prediction model, the server needs to preprocess the sample picture so that the sample picture to be inputted into the pose/shape parameter prediction model meets a model input requirement. Preprocessing methods include clipping and size scaling. For example, the size of the preprocessed sample picture is 224×224.

In step 102, the sample picture is inputted into a parameter prediction model to obtain a predicted pose parameter. The predicted pose parameter is a parameter used for indicating a human body pose in the SMPL parameter prediction model.

In an embodiment, the predicted pose parameter outputted by the pose parameter prediction model is a 72-dimensional parameter, which indicates rotation vectors of 24 joints of a human body.

In a possible implementation, a backbone network structure of the pose parameter prediction model is a residual neural network (ResNet), for example, ResNet50. The specific structure of the pose parameter prediction model is not limited in the embodiments of the present disclosure. Schematically, parameter settings of each network layer in the pose parameter prediction model are shown in Table 1.

Table 1

| Network layer | Output size | Network layer parameters |
|---|---|---|
| Convolutional layer 1 (conv1) | 112×112 | 64*7×7 convolution kernels, step size=2 |
| Max pooling layer (maxpooling) | 56×56 | 3×3 convolution kernels, step size=2 |
| Convolutional layer 2 (conv2) | 56×56 | {64*1×1 convolution kernels, 64*3×3 convolution kernels, 256*1×1 convolution kernels}×3 layers |
| Convolutional layer 3 (conv3) | 28×28 | {128*1×1 convolution kernels, 128*3×3 convolution kernels, 512*1×1 convolution kernels} ×4 layers |
| Convolutional layer 4 (conv4) | 14×14 | {256*1×1 convolution kernels, 256*3×3 convolution kernels, 2048*1×1 convolution kernels}×6 layers |
| Convolutional layer 5 (conv5) | 7×7 | {512*1×1 convolution kernels, 512*3×3 convolution kernels, 2048*1×1 convolution kernels}×3 layers |
| Fully connected layer (fc) | 1×1 | Average pooling, softmax activation function, 75d (75-dimensional vector) |

In step 103, the sample picture is inputted into a shape parameter prediction model to obtain a predicted shape parameter. The predicted shape parameter is a parameter used for indicating a human body shape in the SMPL parameter prediction model.

In an embodiment, the predicted shape parameter outputted by the shape parameter prediction model is a 10-dimensional parameter, which indicates 10 parameters such as a height, size, and head-to-body ratio of a human body.

In a possible implementation, the shape parameter prediction model is constructed based on a simplified visual geometry group (VGG) network. The specific structure of the shape parameter prediction model is not limited in the embodiments of the present disclosure. Schematically, parameter settings of each network layer in the shape parameter prediction model are shown in Table 2.

Table 2

| Network layer | Output size | Network layer parameters |
|---|---|---|
| Convolutional layer 1 (conv1) | 112×112 | 32*3×3 convolution kernels, step size=2 |
| Convolutional layer 2 (conv2) | 56×56 | 64*3×3 convolution kernels, step size=2 |
| Convolutional layer 3 (conv3) | 28×28 | 128*3×3 convolution kernels, step size=2 |
| Convolutional layer 4 (conv4) | 14×14 | 256*3×3 convolution kernels, step size=2 |

(continued)

| Network layer | Output size | Network layer parameters |
|---|---|---|
| Convolutional layer 5 (conv5) | 7×7 | 236*3×3 convolution kernels, step size=2 |
| Fully connected layer 1 (fc1) | 1×1 | 512 |
| Fully connected layer 2 (fc2) | 1×1 | 1024 |
| Fully connected layer 3-output (fc3-output) | 1×1 | 10 |

In step 104, a three-dimensional human body model is constructed by using an SMPL model according to the predicted pose parameter and the predicted shape parameter.

Further, the server substitutes the predicted pose parameter and the predicted shape parameter into the SMPL model to construct a three-dimensional human body model, so as to subsequently evaluate the parameter prediction accuracy of the three-dimensional human body model. The three-dimensional human body model contains vertex coordinates of 6,890 model vertices.

In step 105, the model prediction losses are calculated according to the SMPL parameter prediction model and/or the three-dimensional human body model in combination with annotation information of the sample picture.

To evaluate the difference between a prediction result and a true value, in a possible implementation, the server calculates the model prediction loss by using a pre-constructed loss function according to the prediction result and the annotation information of the sample picture. In an embodiment, the loss function includes at least one loss sub-function, and different loss sub-functions are used for calculating the model prediction losses according to different types of annotation information.

In an embodiment, because sample pictures in different sample picture sets contain different annotation information, the server determines, according to annotation information of a sample picture, to calculate the model prediction loss by using a corresponding loss sub-function.

In an embodiment, the server calculates the model prediction loss according to the annotation information and the SMPL parameter prediction model, and/or the server calculates the model prediction loss according to the annotation information and the three-dimensional human body model.

In step 106, the pose parameter prediction model and the shape parameter prediction model are updated according to the model prediction losses.

In a possible implementation, according to the calculated model prediction losses, the server updates the pose parameter prediction model and the shape parameter prediction model (i.e., optimizes parameters in the models) by using a gradient descent algorithm, and stops updating when the gradient is less than a threshold. The specific method for updating the model is not limited in the embodiments of the present disclosure.

In an embodiment, the model training process is performed by using a learning rate of le-4 and a batch size of 96.

In summary, in the embodiment of the present disclosure, a sample picture containing a human body image is inputted into the pose parameter prediction model and the shape parameter prediction model respectively to obtain a predicted pose parameter and a predicted shape parameter in the SMPL parameter prediction model; a three-dimensional human body model is constructed based on the predicted pose parameter and the predicted shape parameter; a model prediction loss is calculated based on annotation information of the sample picture and at least one of the SMPL parameter prediction model or the three-dimensional human body model; and the pose parameter prediction model and the shape parameter prediction model are updated according to the model prediction loss. In a case that the models are trained by using the method provided in the embodiments of the present disclosure, a sample picture is directly inputted to the model for model training, and it is unnecessary to train the model for extracting human body information in a picture separately, thereby reducing the complexity of model training and improving the efficiency of model training. In addition, the model prediction loss is calculated according to annotation information, predicted parameters, and the three-dimensional human body model constructed based on the predicted parameters, thereby being beneficial to improve the training quality of the model, and thus improving the accuracy of predicted parameters.

In a possible implementation, the loss function predefined by the server includes four loss sub-functions: an SMPL parameter loss function, a joint position loss function, a human body contour loss function, and a regular loss function. The SMPL parameter loss function is used for evaluating a difference between the predicted pose parameter and the annotated SMPL parameter and a difference between the predicted shape parameter and the annotated SMPL parameter. The joint position loss function is used for evaluating a difference between a predicted joint position and an annotated joint position. The human body contour loss function is used for evaluating a difference between a human body contour of a reconstructed three-dimensional human body model and a human body contour in a sample picture.

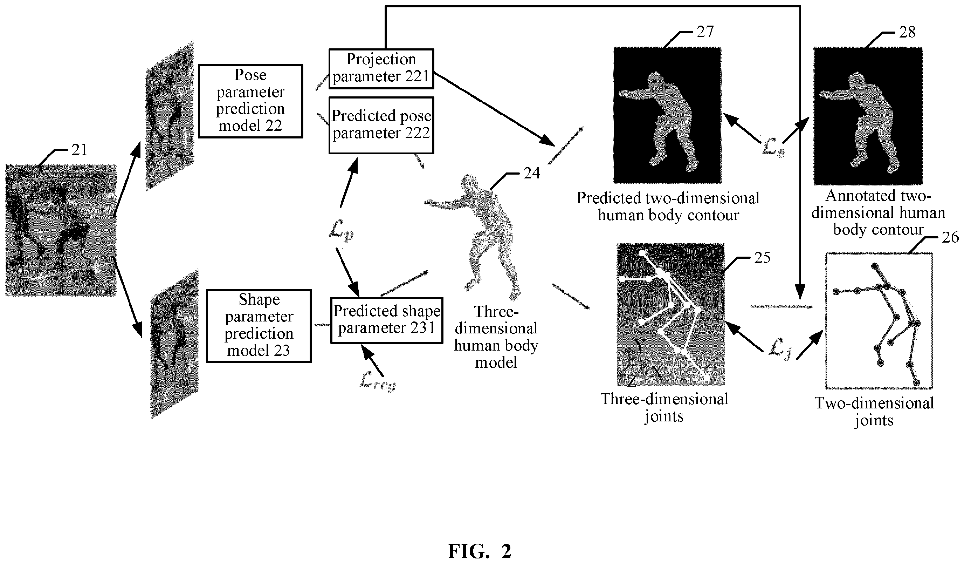

Correspondingly, a model training process performed by the server is shown in FIG. 2. After inputting a sample picture 21 into a pose parameter prediction model 22, the server obtains a projection parameter 221 and a predicted pose parameter 222 outputted by the pose parameter prediction model 22. After inputting the sample picture 21 into a shape parameter prediction model 23, the server obtains a predicted shape parameter 231 outputted by the shape parameter prediction model 23. Further, based on the predicted pose parameter 222 and the predicted shape parameter 231, the server constructs a three-dimensional human body model 24 by using the SMPL model. The process of calculating the model prediction loss according to the predicted parameters, the three-dimensional human body model, and the annotation information is described below with reference to exemplary embodiments.

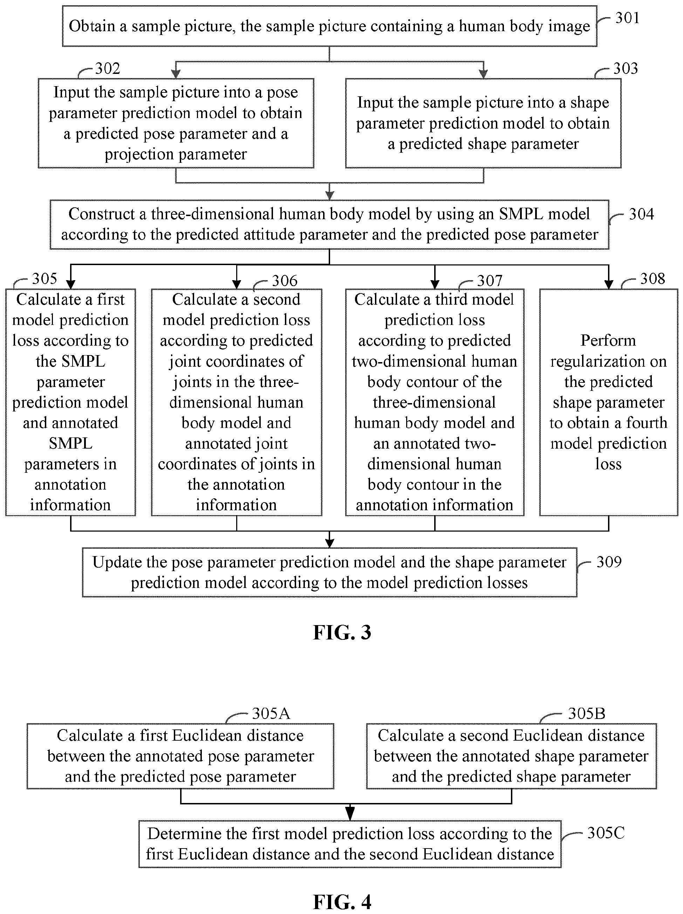

FIG. 3 is a flowchart of a method for training an SMPL parameter prediction model according to another embodiment of the present disclosure. In this embodiment, the training method is applied to a server. The method may include the following steps S301 to S309.

In step 301, a sample picture is obtained. The sample picture contains a human body image.

For the implementation of this step, one may refer to step 101, and the details are not described again in this embodiment.

In step 302, the sample picture is inputted into a pose parameter prediction model to obtain a predicted pose parameter and a projection parameter.

The model prediction loss is to be calculated subsequently according to two-dimensional coordinates (for example, two-dimensional coordinates of joints and two-dimensional coordinates of a human body contour), but the three-dimensional human body model constructed based on the predicted pose parameter and the predicted shape parameter contains only three-dimensional coordinates of the model vertices. Therefore, a projection parameter of the sample picture also needs to be predicted when the pose parameter and the shape parameter are predicted by using the model, so that points on the three-dimensional human body model can subsequently be projected into a two-dimensional image space by using the projection parameter. The projection parameter is related to a photographing angle of the sample picture.

In the implementation, it is found that changing the zoom parameter $C_s$ in the projection parameter or changing the shape parameter $\beta$ affects the human body shape, resulting in ambiguity in the prediction of the projection parameter and the shape parameter. To avoid the ambiguity in the prediction of the projection parameter and the shape parameter, in a possible implementation, the server predicts the pose parameter and the projection parameter by using the pose parameter prediction model. In this case, parameters outputted by the predicted pose parameter model have a total of 75 dimensions, including a 72-dimensional predicted pose parameter $\theta$ and a 3-dimensional projection parameter C.

In step 303, the sample picture is inputted into a shape parameter prediction model to obtain a predicted shape parameter.

In step 304, a three-dimensional human body model is constructed by using an SMPL model according to the predicted pose parameter and the predicted shape parameter.

For the implementation of steps 303 and 304, one may refer steps 103 and 104, and the details are not described again in this embodiment.

In step 305, a first model prediction loss is calculated according to SMPL parameter prediction model and annotated SMPL parameters in annotation information.

In an embodiment, in a case that the annotation information of the sample picture includes annotated SMPL parameters (including an annotated pose parameter and an annotated shape parameter), the server calculates the first model prediction loss by using an SMPL parameter loss function according to the SMPL parameter prediction model (including a predicted pose parameter and a predicted shape parameter) and the annotated SMPL parameters. In a possible implementation, as shown in FIG. 4, this step includes the following steps 305A to 305C.

In step 305A, a first Euclidean distance between the annotated pose parameter and the predicted pose parameter is calculated.

In this embodiment, the server calculates the first Euclidean distance between the annotated pose parameter and the predicted pose parameter (a Euclidean distance between 72-dimensional vectors), and then evaluates the accuracy of prediction of the pose parameter according to the first Euclidean distance. A smaller first Euclidean distance indicates higher accuracy of prediction of the pose parameter.

$$\text{the first Euclidean distance} = \left\| \theta - \hat{\theta} \right\|_2$$

Schematically, the first Euclidean $\qquad$ , where $\theta$ indicates the predicted pose parameter, and $\hat{\theta}$ indicates the annotated pose parameter.

In step 305B, a second Euclidean distance between the annotated shape parameter and the predicted shape parameter is calculated.

Similar to the calculation of the first Euclidean distance, in this embodiment, the server calculates the second Euclidean distance between the annotated shape parameter and the predicted shape parameter (a Euclidean distance between 10-dimensional vectors), and then evaluates the accuracy of prediction of the shape parameter according to the second Euclidean distance. A smaller second Euclidean distance indicates higher the accuracy of prediction of the

shape parameter.

$$\text{the second Euclidean distance} = \left\| \beta - \hat{\beta} \right\|_2$$

Schematically, the second Euclidean , where $\beta$ is the predicted shape parameter, and $\hat{\beta}$ is the annotated shape parameter.

In step 305C, the first model prediction loss is determined according to the first Euclidean distance and the second Euclidean distance.

Further, according to the calculated first Euclidean distance and second Euclidean distance, the server calculates the first model prediction loss (that is, an SMPL parameter prediction loss). In an embodiment, the first model prediction loss $L_p$ is expressed as:

$$L_p = \lambda_p \left( \left\| \beta - \hat{\beta} \right\|_2 + \left\| \theta - \hat{\theta} \right\|_2 \right),$$

where $\lambda_p$ indicates a parameter loss weight. For example, $\lambda_p$ is 60.

Schematically, as shown in FIG. 2, the server calculates the first model prediction loss $L_p$ according to the predicted pose parameter 222 and the predicted shape parameter 231.

In step 306, a second model prediction loss is calculated according to predicted joint coordinates of joints in the three-dimensional human body model and annotated joint coordinates of joints in the annotation information.

In an embodiment, in a case that the annotation information of the sample picture contains the annotated joint coordinates (including two-dimensional annotated joint coordinates and/or three-dimensional annotated joint coordinates), the server first determines the predicted joint coordinates of the joints in the three-dimensional human body model, and calculates the second model prediction loss by using the joint position loss function according to the predicted joint coordinates and the annotated joint coordinates.

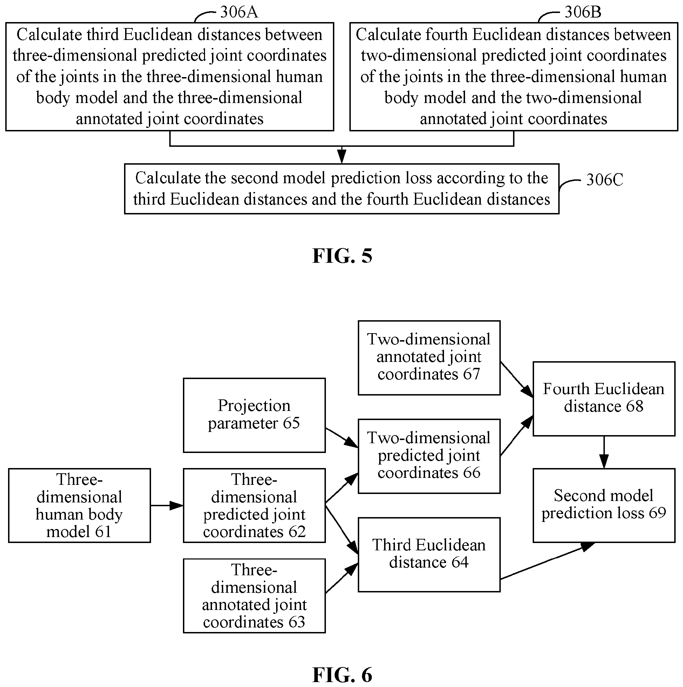

In a possible implementation, as shown in FIG. 5, this step includes the following steps 306A to 306C.

In step 306A, third Euclidean distances between three-dimensional predicted joint coordinates of the joints in the three-dimensional human body model and the three-dimensional annotated joint coordinates are calculated.

In a possible implementation, the server selects 14 joints among 24 joints as target joints, and calculates the third Euclidean distances between the three-dimensional predicted joint coordinates and the three-dimensional annotated joint coordinates of the 14 target joints.

Regarding a manner for calculating the three-dimensional predicted joint coordinates of the joints in the three-dimensional human body model, in an embodiment, the server determines the three-dimensional predicted joint coordinates of the joints in the three-dimensional human body model according to vertex coordinates of model vertices around the joints in the three-dimensional human body model. In a possible implementation, the three-dimensional predicted joint coordinates of a joint are an average value of vertex coordinates of model vertices around the joint.

Schematically, as shown in FIG. 2, the server generates a three-dimensional joint map 25 according to the three-dimensional human body model 24, and the three-dimensional joint map 25 contains three-dimensional predicted joint coordinates of each joint.

After the three-dimensional predicted joint coordinates of each joint are calculated, the server calculates the third Euclidean distance between the three-dimensional predicted joint coordinates and the three-dimensional annotated joint coordinates (corresponding to the same joint). Schematically, the third Euclidean

$$\text{distance} = \sum_{j \in F_M} \left\| M(j) - \hat{j}_{3D} \right\|_2.$$

In which, $F_M$ indicates a set of joints, $M(j)$ indicates three-dimensional predicted joint coordinates of the joint in the three-dimensional human body model, and $\hat{j}_{3D}$ indicates three-dimensional annotated joint coordinates of the joint.

In step 306B, fourth Euclidean distances between two-dimensional predicted joint coordinates of the joints in the three-dimensional human body model and the two-dimensional annotated joint coordinates are calculated.

In addition to evaluating the accuracy of the three-dimensional joint coordinates, the server can further evaluate the accuracy of the two-dimensional joint coordinates. In a possible implementation, this step includes the following steps 1 to 3.

In step 1, the three-dimensional predicted joint coordinates of the joints in the three-dimensional human body model are determined according to vertex coordinates of model vertices around the joints in the three-dimensional human body model.

Because the two-dimensional joints can be obtained by projection of the three-dimensional joints, the server first determines the three-dimensional predicted joint coordinates of the joints before calculating the two-dimensional predicted joint coordinates. For the process of determining the three-dimensional predicted joint coordinates, one may refer to step 306A, and the details are not described again in this step.

.In step 2, the three-dimensional predicted joint coordinates are projected according to the projection parameter to obtain the two-dimensional predicted joint coordinates.

Because the pose parameter prediction model also outputs the projection parameter in addition to the predicted pose parameter, the server can project the three-dimensional predicted joint coordinates according to the projection parameter, that is, project the three-dimensional joints into a two-dimensional image space to obtain two-dimensional predicted joint coordinates of two-dimensional joints.

For example, for three-dimensional predicted joint coordinates M ($j$), the two-dimensional predicted joint coordinates obtained by projection are *proj*(M($j$)).

Schematically, as shown in FIG. 2, the server generates a two-dimensional joint map 26 according to the three-dimensional joint map 25 and the projection parameter 221. The two-dimensional joint map 26 contains the two-dimensional predicted joint coordinates of each joint.

In step 3, the fourth Euclidean distances between the two-dimensional predicted joint coordinates and the two-dimensional annotated joint coordinates are calculated.

After the two-dimensional predicted joint coordinates of each joint are calculated, the server calculates the fourth Euclidean distance between the two-dimensional predicted joint coordinates and the two-dimensional annotated joint coordinates (corresponding to the same joint). Schematically, the fourth Euclidean

$$\text{distance} = \sum_{j \in F_{\text{M}}} \left\| proj(\text{M}\,(j)) - \hat{j}_{2D} \right\|_2 .$$

In which, $F_{\text{M}}$ indicates a set of joints, M($j$) indicates three-dimensional predicted joint coordinates of the joint in the three-dimensional human body model, *proj* indicates projection processing, and $\hat{j}_{2D}$ indicates two-dimensional annotated joint coordinates of the joint.

In step 306C, the second model prediction loss is calculated according to the third Euclidean distances and the fourth Euclidean distances.

Further, according to the calculated third Euclidean distances and fourth Euclidean distances, the server calculates the second model prediction loss (that is, a joint position prediction loss). In an embodiment, the second model prediction loss $L_j$ is expressed as:

$$\text{L}_j = \lambda_{3D} \sum_{j \in F_{\text{M}}} \left\| \text{M}\,(j) - \hat{j}_{3D} \right\|_2 + \lambda_{2D} \sum_{j \in F_{\text{M}}} \left\| proj(\text{M}\,(j)) - \hat{j}_{2D} \right\|_2$$

In which, $\lambda_{3D}$ indicates a three-dimensional joint position loss weight, and $\lambda_{2D}$ indicates a two-dimensional joint position loss weight. For example, $\lambda_{3D}$ and $\lambda_{3D}$ are both 60.0.

Schematically, as shown in FIG. 2, the server calculates the second model prediction loss $L_j$ according to the three-dimensional joint map 25 and the two-dimensional joint map 26.

As shown in FIG. 6, in a complete process of calculating the second model prediction loss, the server first determines three-dimensional predicted joint coordinates 62 of a joint according to a three-dimensional human body model 61, and calculates third Euclidean distances 64 according to the three-dimensional predicted joint coordinates 62 and three-dimensional annotated joint coordinates 63 in annotation information. The server also projects the three-dimensional predicted joint coordinates 62 according to a projection parameter 65 to obtain two-dimensional predicted joint coordinates 66 corresponding to the joint, and calculates fourth Euclidean distances 68 according to the two-dimensional predicted joint coordinates 66 and two-dimensional annotated joint coordinates 67 in the annotation information. Finally, the server determines a second model prediction loss 69 according to the third Euclidean distances 64 and the fourth Euclidean distances 68.

In a case that the annotation information corresponding to the sample picture contains only one of the three-dimensional annotated joint coordinates or the two-dimensional annotated joint coordinates, the server may determine the second model prediction loss based on only the third Euclidean distances or the fourth Euclidean distances. The manner for determining the second model prediction loss is not limited in this embodiment.

In step 307, a third model prediction loss is calculated according to a predicted two-dimensional human body contour of the three-dimensional human body model and an annotated two-dimensional human body contour in the annotation information.

In a case that the annotation information includes an annotated two-dimensional human body contour, the server can generate a predicted two-dimensional human body contour according to the constructed three-dimensional human body model to improve the accuracy of prediction of the human body shape, so as to determine the accuracy of the prediction of the human body shape by calculating a loss between the human body contours.

In an embodiment, the human body contour is used for indicating a human body region in the picture, and may be represented by a black-and-white image. In which, a white region in the black-and-white image is the human body region.

Schematically, as shown in FIG. 2, the server generates a predicted two-dimensional human body contour 27 according to the three-dimensional human body model 24, and calculates the third model prediction loss $L_s$ according to the annotated two-dimensional human body contour 28.

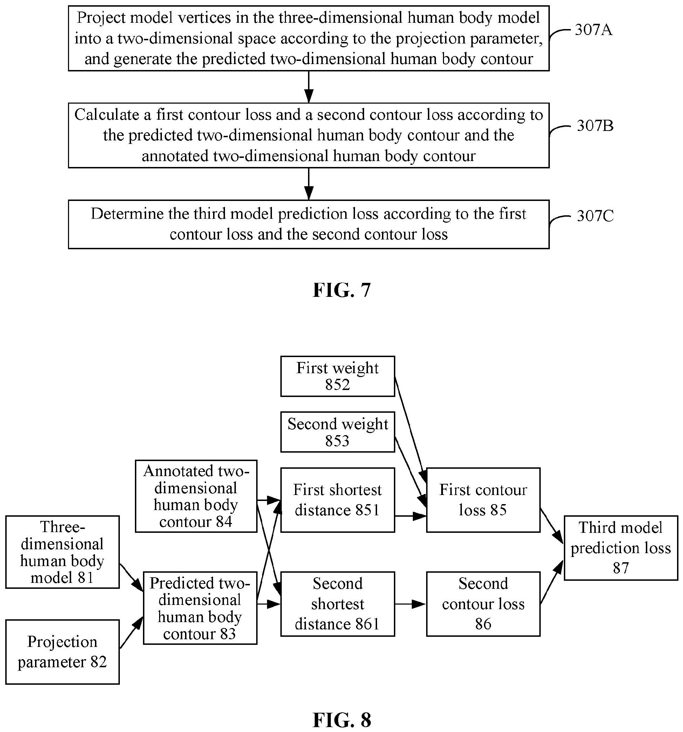

In a possible implementation, as shown in FIG. 7, this step may include the following steps 307A to 307C.

In step 307A, model vertices in the three-dimensional human body model are projected into a two-dimensional space according to the projection parameter, and the predicted two-dimensional human body contour is generated.

If the human body pose and shape are predicted accurately, a two-dimensional human body contour obtained when the three-dimensional human body model is projected into a two-dimensional image space is expected to coincide with a two-dimensional human contour in the sample picture. Therefore, the server can evaluate the accuracy of the prediction of the human body pose and shape based on the difference between the two-dimensional human body contours.

In an embodiment, the server projects each model vertex in the three-dimensional human body model into a two-dimensional space by using a projection function according to the projection parameter, so as to generate a two-dimensional image containing a predicted two-dimensional human body contour.

In step 307B, a first contour loss and a second contour loss are calculated according to the predicted two-dimensional human body contour and the annotated two-dimensional human body contour.

The first contour loss is also referred to as a forward contour loss, and indicates a loss from a predicted two-dimensional human body contour to an annotated two-dimensional human body contour. The second contour loss is also referred to as a reverse contour loss, and indicates a loss from an annotated two-dimensional human body contour to a predicted two-dimensional human body contour.

In a possible implementation, the server may calculate the contour loss by performing the following steps.

First, a first shortest distance from each contour point in the predicted two-dimensional human body contour to the annotated two-dimensional human body contour is calculated; and the first contour loss is calculated according to the first shortest distance corresponding to each contour point in the predicted two-dimensional human body contour.

In a possible implementation, a terminal calculates the first shortest distance from each contour point in the predicted two-dimensional human body contour to the annotated two-dimensional human body contour, and calculates a sum of the first shortest distances corresponding to all contour points to obtain the first contour loss.

During the implementation, it is found that for a blocked region (blocked by other objects) of the three-dimensional human body model, the blocked region is not visible; if the first contour loss is calculated directly based on the first shortest distance without considering visibility, a large first contour loss is generated. Therefore, to improve the accuracy of the first contour loss, in a possible implementation, the process of calculating the first contour loss according to the first shortest distance corresponding to each contour point in the predicted two-dimensional human body contour includes the following steps 1 and 2.

In step 1, a first weight of the contour point corresponding to each model vertex is determined according to visibility of the joint to which the model vertex in the three-dimensional human body model belongs.

In an embodiment, for each model vertex $\upsilon$ in the three-dimensional human body model, the server automatically allocates the each model vertex $\upsilon$ to a closest joint $J(\upsilon)$. The server allocates the model vertices to 14 joints $J(\upsilon)$.

After calculating the first shortest distance corresponding to each contour point in the predicted two-dimensional human body contour, the server detects the visibility of the joint to which the model vertex corresponding to the contour point belongs. If the joint to which a model vertex belongs is visible, the server determines that the first weight of the contour point is 1; if the joint to which a model vertex belongs is invisible, the server determines that the first weight of the contour point is 0. The following formula can be used to determine the first weight of the contour point corresponding to the model vertex:

$$\omega_\upsilon = \begin{cases} 1, \text{ if } J(\upsilon) \text{ is visible} \\ 0, \text{ otherwise} \end{cases}$$

In which, $\omega_\upsilon$ indicates the first weight of the contour point corresponding to the model vertex $\upsilon$, and $J(\upsilon)$ indicates the joint to which the model vertex $\upsilon$ belongs.

Certainly, the server may also first detect the visibility of the joint to which the model vertex corresponding to the contour point belongs. Then, in a case that the joint is not visible, the server stops calculating the shortest distance from the contour point corresponding to the model vertex to the annotated two-dimensional human body contour, thereby reducing the amount of calculation.

In step 2, the first contour loss is calculated according to the first weight and the first shortest distance corresponding to each contour point in the predicted two-dimensional human body contour.

Correspondingly, the server corrects the first shortest distance corresponding to each contour point according to the first weight, and calculates a sum of the corrected first shortest distances to obtain the first contour loss.

In addition, it is also found during the implementation that the inaccurate prediction of joints also affects the predicted two-dimensional human body contour generated by projection. Therefore, to reduce the impact of inaccurate prediction of joints on the first contour loss, in a possible implementation, the process of calculating the first contour loss according to the first shortest distance corresponding to each contour point in the predicted two-dimensional human body contour may include the following steps 1 to 3.

In step 1, the predicted joint coordinates of the joint to which each model vertex in the three-dimensional human body model belongs are determined.

In a possible implementation, for each model vertex $\upsilon$ in the three-dimensional human body model, the server automatically allocates the model vertex $\upsilon$ to a closest joint $J(\upsilon)$, and projects the joint $J(\upsilon)$ into a two-dimensional space according to the projection parameter, to obtain (two-dimensional) predicted joint coordinates of the joint $J(\upsilon)$. The predicted joint coordinates of the joint $J(\upsilon)$ to which each model vertex $\upsilon$ belongs are equal to $proj(M(J(\upsilon)))$.

In step 2, a second weight of the contour point corresponding to each model vertex is determined according to a fifth Euclidean distance between the predicted joint coordinates and the annotated joint coordinates. The second weight is negatively correlated with the fifth Euclidean distance.

After the predicted joint coordinates of the joint are determined, the server determines the accuracy of the prediction of the joint by calculating the fifth Euclidean distance between the predicted joint coordinates and the annotated joint coordinates (of the same joint). The fifth Euclidean distance $= \|proj(M(J(\upsilon))) - \hat{J}(\upsilon)_{2D}\|_2$, where $\hat{J}(\upsilon)_{2D}$ indicates (two-dimensional) annotated joint coordinates of the joint $J(\upsilon)$.

Further, the server determines the second weight of the contour point corresponding to the model vertex belonging to the joint according to the fifth Euclidean distance. The second weight is a positive value, and the second weight is negatively correlated with the fifth Euclidean distance.

In a possible implementation, the second weight of the contour point corresponding to the model vertex is determined according to the following formula:

$$\omega_p = \exp(-\|proj(M(J(\upsilon))) - \hat{J}(\upsilon)_{2D}\|_2)$$

As the accuracy of the prediction of the joint coordinates increases, $\|proj(M(J(\upsilon))) - \hat{J}(\upsilon)_{2D}\|_2$ approaches 0, and correspondingly, the second weight $\omega_p$ approaches 1. As the accuracy of the prediction of the joint coordinates decreases, $\|proj(M(J(\upsilon))) - \hat{J}(\upsilon)_{2D}\|_2$ approaches $-\infty$, and correspondingly, the second weight $\omega_p$ approaches 0.

In step 3, the first contour loss is calculated according to the second weight and the first shortest distance corresponding to each contour point in the predicted two-dimensional human body contour.

Correspondingly, the server corrects the first shortest distance corresponding to each contour point according to the second weight, and calculates a sum of the corrected first shortest distances to obtain the first contour loss.

In a possible implementation, the server calculates the first weight and the second weight at the same time, and calculates the first contour loss according to the first shortest distance, the first weight, and the second weight corresponding to each contour point in the predicted two-dimensional human body contour. Correspondingly, the first contour loss may be expressed as:

$$L_{M2S} = \sum_{p \in M} \omega_\upsilon \omega_p \|p - Sp\|_2^2$$

In which, M indicates the predicted two-dimensional human body contour, and $S_p$ indicates a point in the annotated two-dimensional human body contour closest to a contour point $p$ in the predicted two-dimensional human body contour.

Second, a second shortest distance from each contour point in the annotated two-dimensional human body contour to the predicted two-dimensional human body contour is calculated; and the second contour loss is calculated according to the second shortest distance corresponding to each contour point in the annotated two-dimensional human body contour.

In a possible implementation, the terminal calculates the second shortest distance from each contour point in the annotated two-dimensional human body contour to the predicted two-dimensional human body contour, and calculates a sum of the second shortest distances corresponding to all contour points to obtain the second contour loss. Correspondingly, the second contour loss may be expressed as:

$$L_{S2M} = \sum_{q \in S_b} \|q - M_q\|_2^2 .$$

In which, $S_b$ indicates the annotated two-dimensional human body contour, and $M_q$ indicates a point in the predicted two-dimensional human body contour closest to the contour point q in the annotated two-dimensional human body contour.

In step 307C, the third model prediction loss is determined according to the first contour loss and the second contour loss.

In a possible implementation, the server calculates the third model prediction loss according to the first contour loss, a weight corresponding to the first contour loss, the second contour loss, and a weight corresponding to the second contour loss. The third model prediction loss may be expressed as:

$$L_s = \lambda_{M2S} L_{M2S} + \lambda_{S2M} L_{S2M}$$

In which, $\lambda_{M2S}$ indicates the weight corresponding to the first contour loss, and $\lambda_{S2M}$ indicates the weight corresponding to the second contour loss. For example, $\lambda_{M2S}$ and $\lambda_{S2M}$ are both 3.0.

As shown in FIG. 8, in a complete process of calculating the third model prediction loss, the server first generates a predicted two-dimensional human body contour 83 according to a three-dimensional human body model 81 and a projection parameter 82; then calculates a first contour loss 85 and a second contour loss 86 according to the predicted two-dimensional human body contour 83 and an annotated two-dimensional human body contour 84; and finally determines a third model prediction loss 87 according to the first contour loss 85 and the second contour loss 86. In the process of calculating the first contour loss 85, when the server calculates a first shortest distance 851 from each contour point on the predicted two-dimensional human body contour 83 to the annotated two-dimensional human body contour 84, the server also determines a first weight 852 according to the visibility of the joint to which the contour point belongs, and determines a second weight 853 according to the accuracy of the prediction of the joint to which the contour point belongs, so as to calculate the first contour loss 85 according to the first shortest distance 851, the first weight 852, and the second weight 853. In the process of calculating the second contour loss 86, the server calculates a second shortest distance 861 from each contour point on the annotated two-dimensional human body contour 84 to the predicted two-dimensional human body contour 83, so as to determine the second contour loss 86 according to the second shortest distance 861.

In step 308, regularization is performed on the predicted shape parameter to obtain a fourth model prediction loss.

To avoid excessive deformation of the human body shape, in a possible implementation, the server performs L2 regularization on the predicted shape parameter to obtain the fourth model prediction loss $L_{reg} = \lambda_{reg} \|\beta\|_2$, where $\lambda_{reg}$ indicates a regular loss weight. For example, $\lambda_{reg}$ is 1.0.

Schematically, as shown in FIG. 2, the server obtains the fourth model prediction loss $L_{reg}$ according to the predicted shape parameter 231.

In step 309, the pose parameter prediction model and the shape parameter prediction model are updated according to the model prediction losses.

In a possible implementation, the server reversely trains the pose parameter prediction model and the shape parameter prediction model based on the first, second, third, and fourth model prediction losses calculated in the foregoing steps. For the process of updating, one may refer to step 106, and the details are not be described again in this embodiment.

Because different sample picture sets contain different types of annotation information, the server may perform updating according to a part of the foregoing model prediction losses. The manner for updating is not limited in this embodiment.

In this embodiment, the human body contour is introduced. The server projects the model vertices of the reconstructed three-dimensional human body model to the two-dimensional space according to the projection parameter to obtain the predicted two-dimensional human body contour, and updates the models by using the contour loss between the predicted two-dimensional human body contour and the annotated two-dimensional human body contour, thereby being beneficial to improve the accuracy of the prediction of the shape parameter, and thus improving the accuracy of the reconstructed three-dimensional human body model in the human body shape.

In addition, the contour loss between the predicted two-dimensional human body contour and the annotated two-dimensional human body contour is calculated in consideration of the visibility of the joints and the influence of the accuracy of the prediction of joint coordinates on the contour loss, thereby further improving the accuracy of the calculated contour loss.

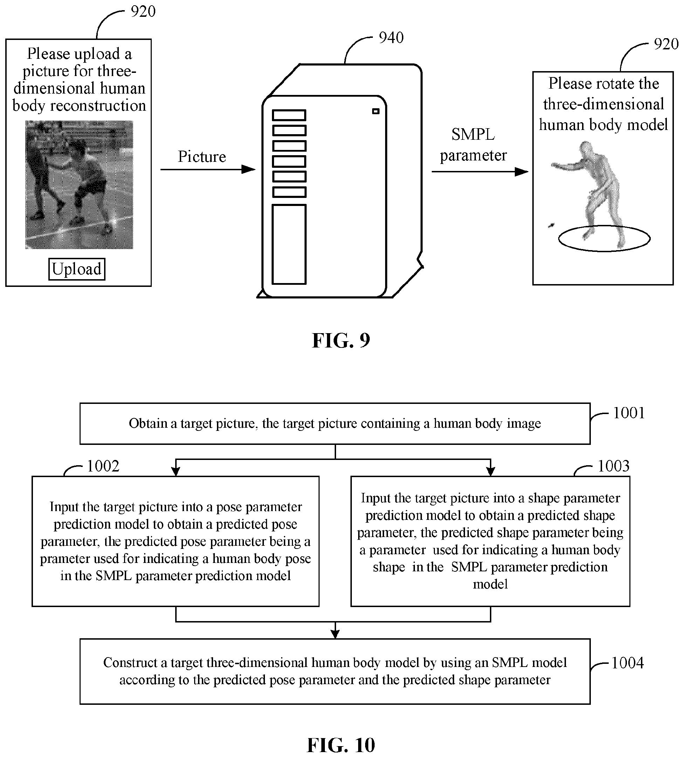

After the model training is completed by using the training method provided in the foregoing embodiment, three-dimensional reconstruction is performed on a human body in a single image by using the trained models. In a possible application scenario, as shown in FIG. 9, a terminal 920 uploads a picture containing a human body image to a server 940. After receiving the picture, the server 940 predicts a pose parameter of the human body in the picture by using a pose parameter prediction model, predicts a shape parameter of the human body in the picture by using a shape parameter prediction model, and sends SMPL parameters including the pose parameter and the shape parameter to the terminal 920. After receiving the SMPL parameters, the terminal 920 reconstructs a three-dimensional human body model by using an SMPL model and displays the reconstructed three-dimensional human body model. Certainly, if the pose parameter prediction model and the shape parameter prediction model are stored in the terminal 920, the terminal 920 may also perform SMPL parameter prediction locally without the participation of the server 940.

In other possible application scenarios, after acquiring an image containing a human body of a player by using a camera, a VR device predicts a pose parameter of the player by using a built-in pose parameter prediction model and predicts a shape parameter of the player by using a shape parameter prediction model; reconstructs a three-dimensional human body model of the player according to the pose parameter and the shape parameter; and displays the three-dimensional human body model of the player in a VR picture in real time, thereby increasing the sense of immersion experienced by the player when using the VR device.

Certainly, the above models obtained through training may be further applicable to other scenarios for reconstructing a three-dimensional human body model based on a single picture (including a human body) or a video (with video frames containing a continuous human body), which is not limited in the embodiments of the present disclosure.

FIG. 10 is a flowchart of a three-dimensional human body reconstruction method according to an embodiment of the present disclosure. In this embodiment, the method is applied to a server. The method may include the following steps 1001 to 1004.

In step 1001, a target picture is obtained. The target picture contains a human body image.

In an embodiment, the target picture is a single picture uploaded by a terminal, or the target picture is a video frame captured from a video uploaded by a terminal.

In an embodiment, before inputting the target picture into a pose/shape parameter prediction model, the server needs to preprocess the target picture so that the target picture to be inputted into the pose/shape parameter prediction model meets a model input requirement. Preprocessing methods include clipping and size scaling. For example, the size of the preprocessed target picture is $224 \times 224$.

In step 1002, the target picture is inputted into a pose parameter prediction model to obtain a predicted pose parameter. The predicted pose parameter is a parameter used for indicating a human body pose in the SMPL parameter prediction model.

In an embodiment, after the server inputs the target picture into the pose parameter prediction model, the pose parameter prediction model outputs a 72-dimensional predicted pose parameter. In a case that the pose parameter prediction model outputs a parameter with 75 dimensions, the server determines a parameter with 72 dimensions as the predicted pose parameter, and determines a parameter with the remaining 3 dimensions as the projection parameter.

In step 1003, the target picture is inputted into a shape parameter prediction model to obtain a predicted shape parameter. The predicted shape parameter is a parameter used for indicating a human body shape in the SMPL parameter prediction model.

In an embodiment, after the server inputs the target picture into the shape parameter prediction model, the shape parameter prediction model outputs a 10-dimensional predicted shape parameter.

In step 1004, a target three-dimensional human body model is constructed by using an SMPL model according to the predicted pose parameter and the predicted shape parameter.

The server inputs the predicted shape parameter and the predicted pose parameter outputted by the models into the SMPL model, so as to construct a target three-dimensional human body model containing 6890 model vertices. In an embodiment, the server sends model data of the target three-dimensional human body model to the terminal for rendering and display by the terminal.

In an embodiment, in a case that the terminal has a three-dimensional human body model reconstruction function, the server sends the predicted shape parameter and the predicted pose parameter outputted by the models to the terminal, so that the terminal reconstructs and displays a three-dimensional human body model.

In summary, in this embodiment of the present disclosure, a sample picture containing a human body image is inputted into the pose parameter prediction model and the shape parameter prediction model respectively to obtain the predicted pose parameter and the predicted shape parameter; a three-dimensional human body model is constructed based on the predicted pose parameter and the predicted shape parameter; a model prediction loss is calculated according to annotation information of the sample picture and at least one of the predicted pose parameter, the predicted shape parameter, and the three-dimensional human body model; and the pose parameter prediction model and the shape parameter prediction model are updated according to the model prediction loss. In a case that the model is trained by using the method provided in the embodiments of the present disclosure, a sample picture is directly inputted into the models for model training, and it is unnecessary to separately train a model for extracting human body information in a picture, thereby reducing the complexity of model training and improving the efficiency of model training. In addition, the model prediction loss is calculated according to annotation information, predicted parameters, and a three-dimensional human body model constructed based on the predicted parameters, thereby being beneficial to improve the training quality of the model, and thus improving the accuracy of predicted parameters.

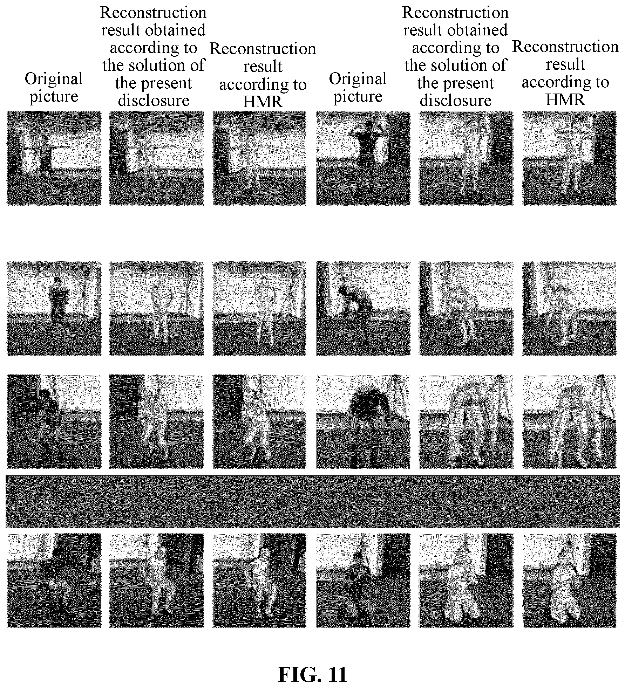

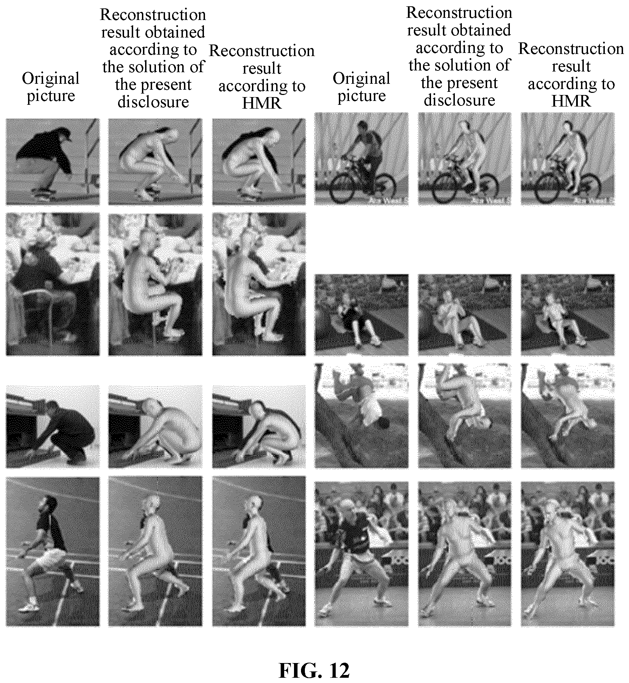

The solution provided in the present disclosure and the leading human mesh recovery (HMR) solution are compared by using a public data set Human3.6M. The obtained three-dimensional human body reconstruction results are shown in FIG. 11. The solution provided in the present disclosure and the leading human mesh recovery (HMR) solution are compared by using a public data set UP (including UP-3D and UPS1h). The obtained three-dimensional human body reconstruction results are shown in FIG. 12.

In addition, the three-dimensional human body reconstruction results shown in FIG. 11 and FIG. 12 are compared with the human body image in the original picture. Analysis results obtained are shown in Table 3.

Table 3

| Solution | Accuracy (Acc) | F1-score | Procrustes analysis - mean per joint position error (mm) |
|---|---|---|---|
| HMR | 0.890 | 0.811 | 92.7 |
| Solution of the present disclosure | 0.900 | 0.856 | 88.9 |

Accuracy is used for evaluating the degree of fitness between a reconstructed human body contour and an original human body contour, F1-score indicates the accuracy and recall rate of the results, and Procrustes analysis - mean per joint position error (PA-MPVPE) indicates a prediction error of a joint position.

From the analytical data in FIG. 11, FIG. 12, and Table 3, compared with the HMR solution, the solution provided in the present disclosure can achieve the following beneficial effects. Both accuracy and a recall rate of the reconstruction result are improved, a degree of fitness between the reconstruction result and the human body image in the original picture becomes higher, a joint position error becomes smaller, and the reconstruction effect is better.

Apparatus embodiments of the present disclosure are described below. An apparatus can be used to execute the method embodiments of the present disclosure. For details not disclosed in the apparatus embodiments of the present disclosure, one may refer to description in the method embodiments of the present disclosure.

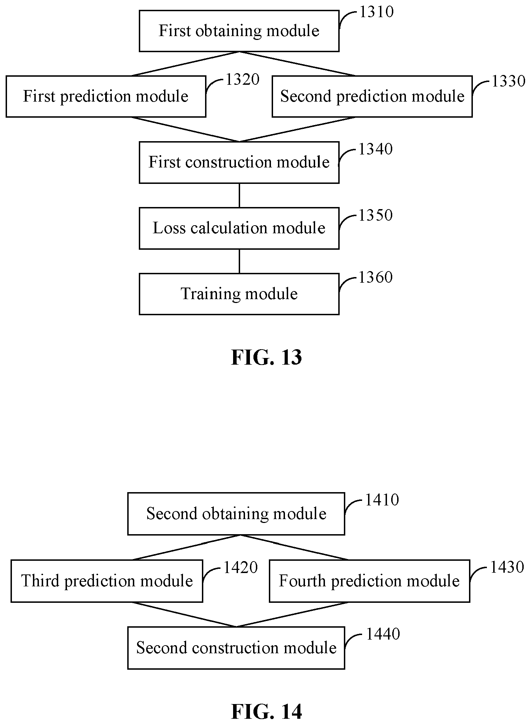

FIG. 13 is a block diagram of an apparatus for training an SMPL parameter prediction model according to an embodiment of the present disclosure. The apparatus has functions of performing the foregoing method embodiments. The functions may be implemented by hardware, or may be implemented software executed by hardware. The apparatus may include: a first obtaining module 1310, a first predicting module 1320, a second prediction module 1330, a first construction module 1340, a loss calculation module 1350 and a training module 1360.

The first obtaining module 1310 is configured to obtain a sample picture. The sample picture contains a human body image.

The first prediction module 1320 is configured to input the sample picture into a pose parameter prediction model to obtain a predicted pose parameter. The predicted pose parameter is a parameter used for indicating a human body pose in the SMPL parameter prediction model.

The second prediction module 1330 is configured to input the sample picture into a shape parameter prediction model to obtain a predicted shape parameter. The predicted shape parameter is a parameter used for indicating a human body shape in the SMPL parameter prediction model.

The first construction module 1340 is configured to construct a three-dimensional human body model by using an SMPL model according to the predicted pose parameter and the predicted shape parameter.

The loss calculation module 1350 is configured to calculate the model prediction losses according to the SMPL parameter prediction model and/or the three-dimensional human body model in combination with annotation information of the sample picture.

The training module 1360 is configured to update the pose parameter prediction model and the shape parameter prediction model according to the model prediction losses.

In an embodiment, the loss calculation module 1350 includes: a first calculation unit, a second calculation unit and/or a third calculation unit.

The first calculation unit is configured to calculate the first model prediction loss according to the SMPL parameter prediction model and annotated SMPL parameters in the annotation information. The annotated SMPL parameters include an annotated pose parameter and an annotated shape parameter.

The second calculation unit is configured to calculate the second model prediction loss according to predicted joint coordinates of joints in the three-dimensional human body model and annotated joint coordinates of joints in the annotation information.

The third calculation unit is configured to calculate the third model prediction loss according to a predicted two-dimensional human body contour of the three-dimensional human body model and an annotated two-dimensional human body contour in the annotation information.

In an embodiment, the first calculation unit is configured to: calculate a first Euclidean distance between the annotated pose parameter and the predicted pose parameter; calculate a second Euclidean distance between the annotated shape parameter and the predicted shape parameter; and determine the first model prediction loss according to the first Euclidean distance and the second Euclidean distance.

In an embodiment, the annotated joint coordinates include three-dimensional annotated joint coordinates and/or two-dimensional annotated joint coordinates. The second calculation unit is configured to: calculate third Euclidean distances between three-dimensional predicted joint coordinates of the joints in the three-dimensional human body model and the three-dimensional annotated joint coordinates; calculate fourth Euclidean distances between two-dimensional predicted joint coordinates of the joints in the three-dimensional human body model and the two-dimensional annotated joint coordinates; and calculate the second model prediction loss according to the third Euclidean distances and/or the fourth Euclidean distances.

In an embodiment, the second calculation unit is further configured to: determine the three-dimensional predicted joint coordinates of the joints in the three-dimensional human body model according to vertex coordinates of model vertices around the joints in the three-dimensional human body model; and calculate the third Euclidean distances between the three-dimensional predicted joint coordinates and the three-dimensional annotated joint coordinates.

In an embodiment, the pose parameter prediction model is further configured to output a projection parameter according to the inputted sample picture. The projection parameter is used for projecting points in a three-dimensional space into a two-dimensional space.

The second calculation unit is further configured to: determine the three-dimensional predicted joint coordinates of the joints in the three-dimensional human body model according to vertex coordinates of model vertices around the joints in the three-dimensional human body model; project the three-dimensional predicted joint coordinates according to the projection parameter to obtain the two-dimensional predicted joint coordinates; and calculate the fourth Euclidean distances between the two-dimensional predicted joint coordinates and the two-dimensional annotated joint coordinates.

In an embodiment, the pose parameter prediction model is further configured to output a projection parameter according to the inputted sample picture. The projection parameter is used for projecting points in a three-dimensional space into a two-dimensional space.

The third calculation unit is configured to: project model vertices in the three-dimensional human body model into a two-dimensional space according to the projection parameter, and generate the predicted two-dimensional human body contour; calculate a first contour loss and a second contour loss according to the predicted two-dimensional human body contour and the annotated two-dimensional human body contour; and determine the third model prediction loss according to the first contour loss and the second contour loss.

In an embodiment, the third calculation unit is configured to: calculate a first shortest distance from each contour point in the predicted two-dimensional human body contour to the annotated two-dimensional human body contour, calculate the first contour loss according to the first shortest distance corresponding to each contour point in the predicted two-dimensional human body contour; and calculate a second shortest distance from each contour point in the annotated two-dimensional human body contour to the predicted two-dimensional human body contour, and calculate the second contour loss according to the second shortest distance corresponding to each contour point in the annotated two-dimensional human body contour.

In an embodiment, the third calculation unit is configured to: determine a first weight of the contour point corresponding to each model vertex according to visibility of the joint to which the model vertex in the three-dimensional human body model belongs; and calculate the first contour loss according to the first weight and the first shortest distance corresponding to each contour point in the predicted two-dimensional human body contour. In a case that the joint to which a model vertex belongs is visible, the first weight of the contour point corresponding to the model vertex is 1; in a case that the joint to which a model vertex belongs is invisible, the first weight of the contour point corresponding to the model vertex is 0.

In an embodiment, the third calculation unit is configured to: determine the predicted joint coordinates of the joint to which each model vertex in the three-dimensional human body model belongs; determine a second weight of the contour point corresponding to each model vertex according to a fifth Euclidean distance between the predicted joint coordinates and the annotated joint coordinates, the second weight is negatively correlated with the fifth Euclidean distance; and calculate the first contour loss according to the second weight and the first shortest distance corresponding to each contour point in the predicted two-dimensional human body contour.

In an embodiment, the apparatus further includes a regular loss module, configured to perform regularization on the predicted shape parameter to obtain a fourth model prediction loss.

The training module 1360 is further configured to: update the pose parameter prediction model and the shape parameter prediction model according to the fourth model prediction loss.

FIG. 14 is a block diagram of a three-dimensional human body reconstruction apparatus according to an embodiment of the present disclosure. The apparatus has functions of performing the foregoing method embodiments. The functions may be implemented by hardware, or may be implemented by software executed by hardware. The apparatus may include: a second obtaining module 1410, a third prediction module 1420, a fourth prediction module 1430 and a second construction module 1440.

The second obtaining module 1410 is configured to obtain a target picture. The target picture contains a human body image.

The third prediction module 1420 is configured to input the target picture into a pose parameter prediction model to obtain a predicted pose parameter. The predicted pose parameter is a parameter used for indicating a human body pose in the SMPL parameter prediction model.

The fourth prediction module 1430 is configured to input the target picture into a shape parameter prediction model to obtain a predicted shape parameter. The predicted shape parameter is a parameter used for indicating a human body shape in the SMPL parameter prediction model.

The second construction module 1440 is configured to construct a target three-dimensional human body model by using an SMPL model according to the predicted pose parameter and the predicted shape parameter.

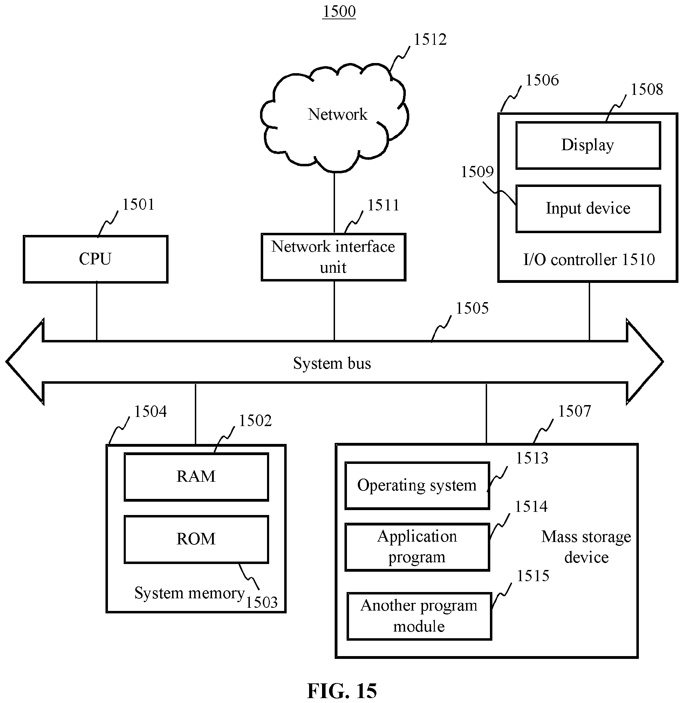

FIG. 15 is a schematic structural diagram of a computer device according to an embodiment of the present disclosure. The computer device is configured to implement the method for training an SMPL parameter prediction model or the three-dimensional human body reconstruction method provided in the foregoing embodiments.

The computer device 1500 includes a central processing unit (CPU) 1501, a system memory 1504 including a random access memory (RAM) 1502 and a read-only memory (ROM) 1503, and a system bus 1505 connecting the system memory 1504 and the CPU 1501. The server 1500 further includes a basic input/output system (I/O system) 1506 for transmitting information between components in a computer, and a mass storage device 1507 used for storing an operating system 1513, an application program 1514, and another program module 1515.

The basic I/O system 1506 includes a display 1508 configured to display information; and an input device 1509 such as a mouse or a keyboard via which a user inputs information. The display 1508 and the input device 1509 are both connected to the CPU 1501 via an input/output controller 1510 connected to the system bus 1505. The basic I/O system 1506 may further include the input/output controller 1510 configured to receive and process inputs from multiple other devices, such as the keyboard, the mouse, or an electronic stylus. Similarly, the input/output controller 1510 further outputs results to a display screen, a printer or another type of an output device.

The mass storage device 1507 is connected to the CPU 1501 via a mass storage controller (not shown) connected to the system bus 1505. The mass storage device 1507 and an associated computer-readable medium provide non-volatile storage for the computer device 1500. That is, the mass storage device 1507 may include a computer readable medium (not shown), such as a hard disk or a CD-ROM drive.

Without loss of generality, the computer-readable medium may include a computer storage medium and a communication medium. The computer-storage medium includes volatile and non-volatile media, and removable and non-removable media implemented by using any method or technology for storing information such as computer-readable instructions, data structures, program modules, or other data. The computer-storage medium includes an RAM, an ROM, a EPROM, a EEPROM, a flash memory or another solid-state storage device, a CD-ROM, a DVD or another optical storage, a magnetic cassette, a magnetic tape, a magnetic disk storage or another magnetic storage device. Certainly, a person skilled in the art may learn that the computer storage medium is not limited to the examples described above. The system memory 1504 and the mass storage device 1507 may be collectively referred to as a memory.

According to the various embodiments of the present disclosure, the computer device 1500 may be connected, through a network such as the Internet, to a remote computer on the network for running. That is, the server 1500 may be connected to a network 1512 via a network interface unit 1511 connected to the system bus 1505, or may be connected to another type of network or a remote computer system via the network interface unit 1511.

The memory stores at least one instruction, at least one section of program, a code set, or an instruction set, and the at least one instruction, the at least one section of program, the code set, or the instruction set is configured to be executed by one or more processors to implement the functions of the method for training an SMPL parameter prediction model or the functions of the three-dimensional human body reconstruction method.

A computer-readable storage medium is further provided in the embodiments of the present disclosure. The storage medium stores at least one instruction, at least one section of program, a code set, or an instruction set, and the at least one instruction, the at least one section of program, the code set, or the instruction set is loaded and executed by a processor to implement the method for training an SMPL parameter prediction model or the three-dimensional human body reconstruction method provided in the foregoing embodiments.

Optionally, the computer-readable storage medium may include: a read-only memory (ROM), a random access memory (RAM), a solid state drive (SSD), an optical disc, or the like. The RAM may include a resistance random access memory (ReRAM) and a dynamic random access memory (DRAM). The sequence numbers of the foregoing embodiments of the present disclosure are merely for the convenience of description, and do not imply the preference among the embodiments.

**Claims**

1. A method for training an SMPL parameter prediction model, performed by a computer device, the method comprising:

   obtaining a sample picture, wherein the sample picture contains a human body image;
   inputting the sample picture into a pose parameter prediction model to obtain a predicted pose parameter, wherein the predicted pose parameter is a parameter used for indicating a human body pose in the SMPL parameter prediction model;
   inputting the sample picture into a shape parameter prediction model to obtain a predicted shape parameter, wherein the predicted shape parameter is a parameter used for indicating a human body shape in the SMPL parameter prediction model;
   calculating model prediction losses according to the SMPL parameter prediction model and annotation information of the sample picture; and
   updating the pose parameter prediction model and the shape parameter prediction model according to the model prediction losses.

2. The method according to claim 1, wherein the model prediction losses comprise a first model prediction loss, and the calculating model prediction losses according to the SMPL parameter prediction model and annotation information of the sample picture comprises:
   calculating the first model prediction loss according to the SMPL parameter prediction model and annotated SMPL parameters in the annotation information, wherein the annotated SMPL parameters comprise an annotated pose parameter and an annotated shape parameter.

3. The method according to claim 2, wherein the calculating the first model prediction loss according to the SMPL parameter prediction model and annotated SMPL parameters in the annotation information comprises:

   calculating a first Euclidean distance between the annotated pose parameter and the predicted pose parameter;
   calculating a second Euclidean distance between the annotated shape parameter and the predicted shape parameter; and
   determining the first model prediction loss according to the first Euclidean distance and the second Euclidean distance.

4. The method according to claim 1, wherein the calculating model prediction losses according to the SMPL parameter prediction model and annotation information of the sample picture comprises:

   constructing a three-dimensional human body model by using an SMPL model according to the predicted pose parameter and the predicted shape parameter; and
   calculating the model prediction losses according to the three-dimensional human body model and the annotation information of the sample picture.

5. The method according to claim 4, wherein the model prediction losses comprise a second model prediction loss , and the calculating the model prediction losses according to the three-dimensional human body model and the annotation information of the sample picture comprises:
   calculating the second model prediction loss according to predicted joint coordinates of joints in the three-dimensional human body model and annotated joint coordinates of joints in the annotation information.

6. The method according to claim 5, wherein the annotated joint coordinates comprise three-dimensional annotated joint coordinates and/or two-dimensional annotated joint coordinates; and
   wherein the calculating the second model prediction loss according to predicted joint coordinates of joints in the three-dimensional human body model and annotated joint coordinates of joints in the annotation information comprises:

calculating third Euclidean distances between three-dimensional predicted joint coordinates of the joints in the three-dimensional human body model and the three-dimensional annotated joint coordinates; and

calculating the second model prediction loss according to the third Euclidean distances.

7. The method according to claim 6, wherein the calculating third Euclidean distances between three-dimensional predicted joint coordinates of the joints in the three-dimensional human body model and the three-dimensional annotated joint coordinates comprises:

determining the three-dimensional predicted joint coordinates of the joints in the three-dimensional human body model according to vertex coordinates of model vertices around the joints in the three-dimensional human body model; and

calculating the third Euclidean distances between the three-dimensional predicted joint coordinates and the three-dimensional annotated joint coordinates.

8. The method according to claim 6, wherein the calculating the second model prediction loss according to the third Euclidean distances comprises:

calculating fourth Euclidean distances between two-dimensional predicted joint coordinates of the joints in the three-dimensional human body model and the two-dimensional annotated joint coordinates; and

calculating the second model prediction loss according to the fourth Euclidean distances.

9. The method according to claim 8, wherein the pose parameter prediction model outputs a projection parameter according to the inputted sample picture, and the projection parameter is used for projecting points in a three-dimensional space into a two-dimensional space; and

wherein the calculating fourth Euclidean distances between two-dimensional predicted joint coordinates of the joints in the three-dimensional human body model and the two-dimensional annotated joint coordinates comprises:

determining the three-dimensional predicted joint coordinates of the joints in the three-dimensional human body model according to vertex coordinates of model vertices around the joints in the three-dimensional human body model;

projecting the three-dimensional predicted joint coordinates according to the projection parameter to obtain the two-dimensional predicted joint coordinates; and

calculating the fourth Euclidean distances between the two-dimensional predicted joint coordinates and the two-dimensional annotated joint coordinates.

10. The method according to claim 4, wherein the model prediction losses comprise a third model prediction loss; and the calculating the model prediction losses according to the three-dimensional human body model and the annotation information of the sample picture comprises:

calculating the third model prediction loss according to a predicted two-dimensional human body contour of the three-dimensional human body model and an annotated two-dimensional human body contour in the annotation information.

11. The method according to claim 10, wherein the pose parameter prediction model outputs a projection parameter according to the inputted sample picture, and the projection parameter is used for projecting points in a three-dimensional space into a two-dimensional space; and

wherein the calculating the third model prediction loss according to a predicted two-dimensional human body contour of the three-dimensional human body model and an annotated two-dimensional human body contour in the annotation information comprises:

projecting model vertices in the three-dimensional human body model into a two-dimensional space according to the projection parameter, and generating the predicted two-dimensional human body contour;

calculating a first contour loss and a second contour loss according to the predicted two-dimensional human body contour and the annotated two-dimensional human body contour; and

determining the third model prediction loss according to the first contour loss and the second contour loss.

12. The method according to claim 11, wherein the calculating a first contour loss and a second contour loss according to the predicted two-dimensional human body contour and the annotated two-dimensional human body contour comprises:

calculating a first shortest distance from each contour point in the predicted two-dimensional human body contour to the annotated two-dimensional human body contour, and calculating the first contour loss according to the first shortest distance corresponding to each contour point in the predicted two-dimensional human body contour; and

calculating a second shortest distance from each contour point in the annotated two-dimensional human body contour to the predicted two-dimensional human body contour, and calculating the second contour loss according to the second shortest distance corresponding to each contour point in the annotated two-dimensional human body contour.

13. The method according to claim 12, wherein the calculating the first contour loss according to the first shortest distance corresponding to each contour point in the predicted two-dimensional human body contour comprises:

determining a first weight of the contour point corresponding to each model vertex according to visibility of the joint to which the each model vertex in the three-dimensional human body model belongs; and calculating the first contour loss according to the first weight and the first shortest distance corresponding to each contour point in the predicted two-dimensional human body contour, wherein in a case that the joint to which a model vertex belongs is visible, the first weight of the contour point corresponding to the model vertex is 1; and in a case that the joint to which a model vertex belongs is invisible, the first weight of the contour point corresponding to the model vertex is 0.

14. The method according to claim 12, wherein the calculating the first contour loss according to the first shortest distance corresponding to each contour point in the predicted two-dimensional human body contour comprises:

determining the predicted joint coordinates of the joint to which each model vertex in the three-dimensional human body model belongs;

determining a second weight of the contour point corresponding to each model vertex according to a fifth Euclidean distance between the predicted joint coordinates and the annotated joint coordinates, the second weight and the fifth Euclidean distance having a negative correlation; and calculating the first contour loss according to the second weight and the first shortest distance corresponding to each contour point in the predicted two-dimensional human body contour.

15. The method according to any one of claims 1 to 14, further comprising:

performing regularization on the predicted shape parameter to obtain a fourth model prediction loss; and updating the pose parameter prediction model and the shape parameter prediction model according to the fourth model prediction loss.

16. A three-dimensional human body reconstruction method, comprising:

obtaining a target picture, wherein the target picture contains a human body image;

inputting the target picture into a pose parameter prediction model to obtain a predicted pose parameter, wherein the predicted pose parameter is a parameter used for indicating a human body pose in the SMPL parameter prediction model;

inputting the target picture into a shape parameter prediction model to obtain a predicted shape parameter, wherein the predicted shape parameter is a parameter used for indicating a human body shape in the SMPL parameter prediction model; and

constructing a target three-dimensional human body model by using an SMPL model according to the predicted pose parameter and the predicted shape parameter.

17. An apparatus for training an SMPL parameter prediction model, the apparatus comprising:

a first obtaining module, configured to obtain a sample picture, the sample picture containing a human body image;

a first prediction module, configured to input the sample picture into a pose parameter prediction model to obtain a predicted pose parameter, the predicted pose parameter being a parameter used for indicating a human body pose in predicted SMPL parameters;
a second prediction module, configured to input the sample picture into a shape parameter prediction model to obtain a predicted shape parameter, the predicted shape parameter being a parameter used for indicating a human body shape in the predicted SMPL parameters;
a loss calculation module, configured to calculate model prediction losses according to the predicted SMPL parameters and annotation information of the sample picture; and
a training module, configured to reversely train the pose parameter prediction model and the shape parameter prediction model according to the model prediction losses.

18. A three-dimensional human body reconstruction apparatus, comprising:

a second obtaining module, configured to obtain a target picture, the target picture containing a human body image;
a third prediction module, configured to input the target picture into a pose parameter prediction model to obtain a predicted pose parameter, the predicted pose parameter being a parameter used for indicating a human body pose in predicted SMPL parameters;
a fourth prediction module, configured to input the target picture into a shape parameter prediction model to obtain a predicted shape parameter, the predicted shape parameter being a parameter used for indicating a human body shape in the predicted SMPL parameters; and
a second construction module, configured to construct a target three-dimensional human body model by using an SMPL model according to the predicted pose parameter and the predicted shape parameter.

19. A computer device, comprising a processor and a memory, wherein the memory stores at least one instruction, at least one segment of program, a code set or an instruction set, the at least one instruction, the at least one segment of program, the code set or the instruction set is executed by the processor to implement the method for training an SMPL parameter prediction model according to any one of claims 1 to 15 or the three-dimensional human body reconstruction method according to claim 16.

20. A computer-readable storage medium, storing at least one instruction, at least one segment of program, a code set or an instruction set, wherein the at least one instruction, the at least one segment of program, the code set or the instruction set is executed by a processor to implement the method for training an SMPL parameter prediction model according to any one of claims 1 to 15 or the three-dimensional human body reconstruction method according to claim 16.

Obtain a sample picture, the sample picture containing a human body image ⌐101

⌐102
Input the sample picture into a pose parameter prediction model to obtain a predicted pose parameter, the predicted pose parameter being a prameter indicating a human body pose in the SMPL parameter prediction model

⌐103
Input the sample picture into a shape parameter prediction model to obtain a predicted shape parameter, the predicted shape parameter being a parameter indicating a human body shape in the SMPL parameter prediction model

Construct a three-dimensional human body model by using an SMPL model according to the predicted pose parameter and the predicted shape parameter ⌐104

Calculate model prediction losses according to the predicted SMPL parameters and/or the three-dimensional human body model in combination with annotation information of the sample picture ⌐105

Update the pose parameter prediction model and the shape parameter prediction model according to the model prediction losses ⌐106

**FIG. 1**

**FIG. 2**

Obtain a sample picture, the sample picture containing a human body image — 301

302 ⌐

Input the sample picture into a pose parameter prediction model to obtain a predicted pose parameter and a projection parameter

303 ⌐

Input the sample picture into a shape parameter prediction model to obtain a predicted shape parameter

Construct a three-dimensional human body model by using an SMPL model according to the predicted attitude parameter and the predicted pose parameter — 304

305 ⌐

Calculate a first model prediction loss according to the SMPL parameter prediction model and annotated SMPL parameters in annotation information

306 ⌐

Calculate a second model prediction loss according to predicted joint coordinates of joints in the three-dimensional human body model and annotated joint coordinates of joints in the annotation information

307 ⌐

Calculate a third model prediction loss according to predicted two-dimensional human body contour of the three-dimensional human body model and an annotated two-dimensional human body contour in the annotation information

308 ⌐

Perform regularization on the predicted shape parameter to obtain a fourth model prediction loss

Update the pose parameter prediction model and the shape parameter prediction model according to the model prediction losses — 309

**FIG. 3**

305A ⌐

Calculate a first Euclidean distance between the annotated pose parameter and the predicted pose parameter

305B ⌐

Calculate a second Euclidean distance between the annotated shape parameter and the predicted shape parameter

Determine the first model prediction loss according to the first Euclidean distance and the second Euclidean distance — 305C

**FIG. 4**

┌─ 306A
| Calculate third Euclidean distances between three-dimensional predicted joint coordinates of the joints in the three-dimensional human body model and the three-dimensional annotated joint coordinates |

┌─ 306B
| Calculate fourth Euclidean distances between two-dimensional predicted joint coordinates of the joints in the three-dimensional human body model and the two-dimensional annotated joint coordinates |

| Calculate the second model prediction loss according to the third Euclidean distances and the fourth Euclidean distances | ─ 306C

**FIG. 5**

| Two-dimensional annotated joint coordinates 67 |

| Projection parameter 65 |

| Three-dimensional human body model 61 |

| Three-dimensional predicted joint coordinates 62 |

| Two-dimensional predicted joint coordinates 66 |

| Fourth Euclidean distance 68 |

| Second model prediction loss 69 |

| Three-dimensional annotated joint coordinates 63 |

| Third Euclidean distance 64 |

**FIG. 6**

Project model vertices in the three-dimensional human body model into a two-dimensional space according to the projection parameter, and generate the predicted two-dimensional human body contour — 307A

Calculate a first contour loss and a second contour loss according to the predicted two-dimensional human body contour and the annotated two-dimensional human body contour — 307B

Determine the third model prediction loss according to the first contour loss and the second contour loss — 307C

**FIG. 7**

First weight 852

Second weight 853

Annotated two-dimensional human body contour 84

First shortest distance 851

First contour loss 85

Three-dimensional human body model 81

Predicted two-dimensional human body contour 83

Second shortest distance 861

Second contour loss 86

Third model prediction loss 87

Projection parameter 82

**FIG. 8**

920

Please upload a
picture for three-
dimensional human
body reconstruction

Upload

Picture

940

SMPL
parameter

920

Please rotate the
three-dimensional
human body model

**FIG. 9**

Obtain a target picture, the target picture containing a human body image — 1001

1002

Input the target picture into a pose parameter prediction model to obtain a predicted pose parameter, the predicted pose parameter being a prameter used for indicating a human body pose in the SMPL parameter prediction model

1003

Input the target picture into a shape parameter prediction model to obtain a predicted shape parameter, the predicted shape parameter being a parameter used for indicating a human body shape in the SMPL parameter prediction model

Construct a target three-dimensional human body model by using an SMPL model according to the predicted pose parameter and the predicted shape parameter — 1004

**FIG. 10**

**FIG. 11**

FIG. 12

First obtaining module — 1310

First prediction module — 1320

Second prediction module — 1330

First construction module — 1340

Loss calculation module — 1350

Training module — 1360

**FIG. 13**

Second obtaining module — 1410

Third prediction module — 1420

Fourth prediction module — 1430

Second construction module — 1440

**FIG. 14**

1500

1512

Network

1506

1508

Display

1509

Input device

I/O controller 1510

1501

CPU

1511

Network interface
unit

1505

System bus

1504

1502

RAM

ROM

System memory 1503

1507

1513

Operating system

1514

Application
program

Mass storage
device

1515

Another program
module

**FIG. 15**

## INTERNATIONAL SEARCH REPORT

| | International application No. |
|---|---|
| | **PCT/CN2020/072023** |

**A.    CLASSIFICATION OF SUBJECT MATTER**

G06T 13/40(2011.01)i

According to International Patent Classification (IPC) or to both national classification and IPC

**B.    FIELDS SEARCHED**

Minimum documentation searched (classification system followed by classification symbols)

G06T 13/-

Documentation searched other than minimum documentation to the extent that such documents are included in the fields searched

Electronic data base consulted during the international search (name of data base and, where practicable, search terms used)

CNABS, CNTXT, CNKI, SIPOABS, DWPI: 人体, 三维, 重建, 多人线性蒙皮, 参数, 预测, 姿态, 形态, 标注, 图片, 图像, 二维, 损失, 训练, 反向, human, 3D, rebuild, SMPL, parameter, predict, gesture, posture, mark, picture, image, 2D, loss, training, reverse

**C.    DOCUMENTS CONSIDERED TO BE RELEVANT**

| Category* | Citation of document, with indication, where appropriate, of the relevant passages | Relevant to claim No. |
|---|---|---|
| PX | CN 109859296 A (TENCENT TECHNOLOGY SHENZHEN CO., LTD.) 07 June 2019 (2019-06-07) claims 1-16, and description, paragraphs 64-280 | 1-20 |
| Y | CN 109285215 A (TENCENT TECHNOLOGY SHENZHEN CO., LTD.) 29 January 2019 (2019-01-29) description, paragraphs 46-256 | 1-20 |
| Y | DOU, Pengfei et al. "End-to-end 3D Face Reconstruction with Deep Neural Networks" *2017 IEEE International Conference on Computer Vision,* 09 November 2017 (2017-11-09), p. 1504, left column, line 1 to p. 1506, right column, sixth-to-last line | 1-20 |
| A | CN 108594997 A (TENCENT TECHNOLOGY SHENZHEN CO., LTD.) 28 September 2018 (2018-09-28) entire document | 1-20 |

☐ Further documents are listed in the continuation of Box C.    ☑ See patent family annex.

| | |
|---|---|
| *    Special categories of cited documents:<br>"A"    document defining the general state of the art which is not considered to be of particular relevance<br>"E"    earlier application or patent but published on or after the international filing date<br>"L"    document which may throw doubts on priority claim(s) or which is cited to establish the publication date of another citation or other special reason (as specified)<br>"O"    document referring to an oral disclosure, use, exhibition or other means<br>"P"    document published prior to the international filing date but later than the priority date claimed | "T"    later document published after the international filing date or priority date and not in conflict with the application but cited to understand the principle or theory underlying the invention<br>"X"    document of particular relevance; the claimed invention cannot be considered novel or cannot be considered to involve an inventive step when the document is taken alone<br>"Y"    document of particular relevance; the claimed invention cannot be considered to involve an inventive step when the document is combined with one or more other such documents, such combination being obvious to a person skilled in the art<br>"&"    document member of the same patent family |

| Date of the actual completion of the international search | Date of mailing of the international search report |
|---|---|
| **24 March 2020** | **03 April 2020** |

| Name and mailing address of the ISA/CN | Authorized officer |
|---|---|
| **China National Intellectual Property Administration (ISA/CN)**<br>**No. 6, Xitucheng Road, Jimenqiao Haidian District, Beijing 100088**<br>**China** | |
| Facsimile No. **(86-10)62019451** | Telephone No. |

Form PCT/ISA/210 (second sheet) (January 2015)

## INTERNATIONAL SEARCH REPORT
### Information on patent family members

International application No.

**PCT/CN2020/072023**

| Patent document cited in search report | | | Publication date (day/month/year) | Patent family member(s) | Publication date (day/month/year) |
|---|---|---|---|---|---|
| CN | 109859296 | A | 07 June 2019 | None | |
| CN | 109285215 | A | 29 January 2019 | None | |
| CN | 108594997 | A | 28 September 2018 | None | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201910103414X